# EUROPEAN PATENT SPECIFICATION

(11) **EP 3 683 885 B1**
(45) Date of publication and mention of the grant of the patent: **20.05.2026**
(21) Application number: 18872310.0
(22) Date of filing: 05.10.2018
(51) Int. Cl.: H01M 10/08, H01M 50/463, H01M 10/10, H01M 50/466, H01M 50/469

(54) **LEAD STORAGE BATTERY**
BLEIAKKUMULATOR
ACCUMULATEUR AU PLOMB

(30) Priority: 31.10.2017 JP 2017211358
(43) Date of publication of application: 22.07.2020
(73) Proprietor: GS Yuasa International Ltd., Kyoto-shi, Kyoto 601-8520 (JP)
(72) Inventor: KYO, Masaaki, Kyoto-shi Kyoto 601-8520 (JP); INAGAKI, Satoshi, Kyoto-shi Kyoto 601-8520 (JP); WADA, Hidetoshi, Kyoto-shi Kyoto 601-8520 (JP)
(74) Representative: Isarpatent
(86) International application number: PCT/JP2018/037298
(87) International publication number: WO 2019/087679

(56) References cited:
- WO-A1-2016/121510
- WO-A1-2016/204049
- WO-A1-2017/098665
- JP-A- 2001 236 988
- JP-A- 2001 236 988
- JP-A- 2017 033 662
- JP-A- 2017 033 740
- JP-A- H04 218 259
- JP-A- H07 105 929
- JP-Y- S3 730 031

## Description

### TECHNICAL FIELD

The present invention relates to a lead-acid battery.

### BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution.

Generally, a sulfuric acid aqueous solution is used as the electrolyte solution (Patent Document 1). Patent Document 1 also proposes that an electrolyte solution contain aluminum ions.

Meanwhile, a separator having a rib may be used as the separator. Patent Document 2 proposes a separator for a flooded-type lead-acid battery including a main rib and a mini rib formed on a surface opposite to the main rib.

### PRIOR ART DOCUMENTS

### PATENT DOCUMENTS

Patent Document 1: JP-A-2016-152130
Patent Document 2: JP-A-2015-216125

### SUMMARY OF THE INVENTION

### PROBLEMS TO BE SOLVED BY THE INVENTION

The lead-acid battery is sometimes used in a poor charged state called a partial state of charge (PSOC). For example, in a charge control vehicle or an idling stop (IS) vehicle, a lead-acid battery is used in the PSOC. Therefore, the lead-acid battery is required to be excellent in life performance in a cycle test under PSOC conditions (hereinafter referred to as PSOC life performance). When an electrolyte solution containing aluminum ions is used, the PSOC life performance is improved to some extent, but charge acceptability after overdischarge decreases.

### MEANS FOR SOLVING THE PROBLEMS

One aspect of the present invention relates to a lead-acid battery including: a positive electrode plate; a negative electrode plate; a separator interposed between the positive electrode plate and the negative electrode plate; and an electrolyte solution. The separator includes a rib on both sides, the negative electrode plate side, and the positive electrode plate side, the electrolyte solution contains aluminum ions, and a concentration of the aluminum ions in the electrolyte solution is 0.02 mol/L or more and 0.25 mol/L or less.

### ADVANTAGES OF THE INVENTION

In the lead-acid battery, excellent PSOC life performance can be ensured, and a decrease in charge acceptability after overdischarge can be prevented.

### BRIEF DESCRIPTION OF THE DRAWINGS

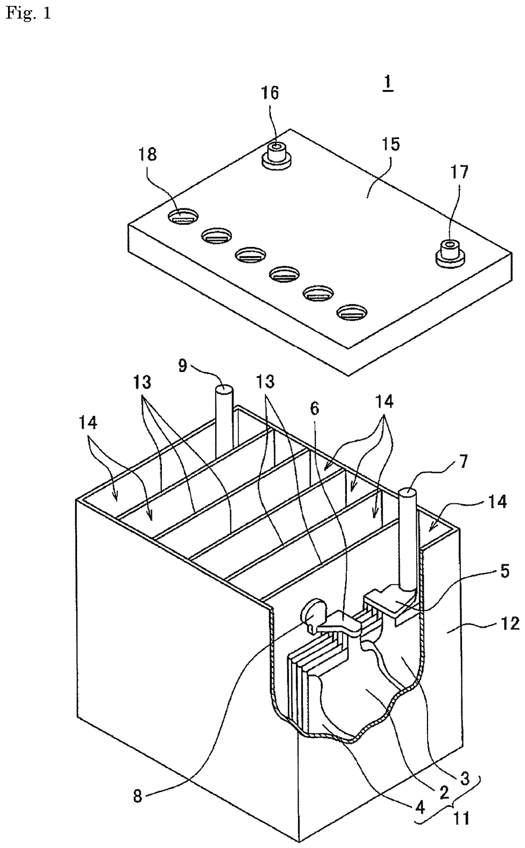

Fig. 1 is an exploded perspective view showing an external appearance and an internal structure of a lead-acid battery, which is partially cut off, according to one aspect of the present invention.

### MODES FOR CARRYING OUT THE INVENTION

A lead-acid battery according to one aspect of the present invention includes a positive electrode plate, a negative electrode plate, a separator interposed between the positive electrode plate and the negative electrode plate, and an electrolyte solution. The separator includes a rib (first rib) on at least the negative electrode plate side. The electrolyte solution contains aluminum ions, and the concentration of the aluminum ions in the electrolyte solution is not less than 0.02 mol/L and not more than 0.25 mol/L.

In a lead-acid battery, conventionally, metal ions such as sodium ions and aluminum ions have been added to an electrolyte solution. For example, when sodium ions are added, a permeation short circuit is prevented, and when aluminum ions are added, PSOC life performance is improved.

In the lead-acid battery, during discharge, lead sulfate is generated at both the positive electrode and the negative electrode, and water is generated at the positive electrode. On the other hand, at the time of charge, metallic lead, lead dioxide, and sulfuric acid are generated from lead sulfate and water. When aluminum ions are added to the electrolyte solution, lead sulfate precipitated during discharge is miniaturized, and the reducibility of lead sulfate to metallic lead during charge is improved. As a result, the amount of lead sulfate accumulated without being reduced decreases, and the PSOC life performance is improved to some extent. However, when the PSOC life is prolonged, the accumulated amount of lead sulfate inevitably increases, and hence the specific gravity of the electrolyte solution decreases. The decrease in the specific gravity of the electrolyte solution is particularly remarkable during overdischarge. When the specific gravity of the electrolyte solution decreases, aluminum ions contained in the electrolyte solution precipitate as aluminum hydroxide, and the resistance of the electrolyte solution increases. Therefore, the charge acceptability during overdischarge decreases. However, such a decrease in charge acceptability during overdischarge does not occur even when sodium ions are added to the electrolyte solution, and such a decrease is a problem unique to a case where aluminum ions are added to the electrolyte solution, and is not known conventionally.

In the above aspect of the present invention, at the time of using an electrolyte solution containing aluminum ions with a concentration of 0.02 mol/L or more and 0.25 mol/L or less, a separator including a first rib on at least the negative electrode plate side is used. The first rib of the separator improves the diffusivity of the electrolyte solution near the negative electrode plate, thus preventing a decrease in the specific gravity of the electrolyte solution near the negative electrode plate. This prevents precipitation of aluminum hydroxide during overdischarge, to decrease the resistance of the electrolyte solution, and as a result, a decrease in charge acceptability can be prevented. Further, the prevention of a decrease in the specific gravity of the electrolyte solution prevents coarsening of lead sulfate, so that the PSOC life performance can be improved together with an effect produced by aluminum ions.

The effect of improving the PSOC life performance by providing the first rib is hardly obtained when the concentration of aluminum ions in the electrolyte solution is 0.01 mol/L. However, when the concentration of aluminum ions in the electrolyte solution is 0.02 mol/L or more and 0.25 mol/L or less, the effect of improving the PSOC life performance by the first rib is significantly large as compared to that in the case of 0.01 mol/L. As described above, when the concentration of aluminum ions is 0.02 mol/L or more and 0.25 mol/L or less, an effect produced by providing the first ribs is apparent and exerted fully.

The addition of aluminum ions to the electrolyte solution prolongs the PSOC life. As a result, with the accumulation of lead sulfate and the stratification of the electrolyte solution, the specific gravity of the upper portion of the electrolyte solution decreases. Thus, at the end of the life, lead ions in the electrolyte solution are reduced on the negative electrode side, metallic lead is deposited in a dendritic state, and a permeation short circuit is likely to occur. In contrast, in the above aspect of the present invention, the particle size of lead sulfate decreases by the action of aluminum ions, and the diffusivity of the electrolyte solution near the negative electrode plate is improved by the action of the first rib on the negative electrode plate side of the separator, thereby preventing a decrease in the specific gravity of the electrolyte solution. Thus, even under conditions where the PSOC life is prolonged and a permeation short circuit at the end of life is likely to occur, it is possible to prevent an increase in the concentration of lead ions in the electrolyte solution and prevent permeation short circuit.

From the viewpoint of further increasing the charge acceptability after overdischarge, the concentration of aluminum ions in the electrolyte solution is preferably 0.02 mol/L or more and 0.20 mol/L or less.

The concentration of aluminum ions in the electrolyte solution is obtained by inductively coupled plasma (ICP) emission spectroscopy of the electrolyte solution taken out from a chemically converted, fully charged lead-acid battery. More specifically, atomic absorption measurement is performed using an ICP emission spectrometer (ICPS-8000, manufactured by Shimadzu Corporation), and the concentration of aluminum ions is obtained from a calibration curve.

In the present specification, the fully charged state of the lead-acid battery is a state where, in the case of a flooded-type battery, in a water bath at 25°C, constant current charge is performed at a current of 0.2 CA to reach 2.5 V/cell, and then the constant current charge is further performed at 0.2 CA for two hours. In the case of a valve regulated battery, the fully charged state is a state where a constant current constant voltage charge of 2.23 V/cell is performed at 0.2 CAin an air tank at 25°C, and the charge is ended at the point when the charge current at the time of constant voltage charge becomes 1 mCA or lower.

In the present specification, 1 CA is a current value (A) having the same numerical value as the nominal capacity (Ah) of the battery. For example, when the battery has a nominal capacity of 30 Ah, 1 CAis 30 A, and 1 mCA is 30 mA.

It is preferable that the separator further include a rib (second rib) on the positive electrode plate side as well. In this case, the oxidation degradation of the separator can be prevented.

The separator may have a bag shape. When a bag-shaped separator is used, the electrolyte solution is likely to stay. However, by providing the first rib and the second rib, the diffusivity of the electrolyte solution increases, so that it is possible to further improve the PSOC life performance, and further prevent a decrease in charge acceptability after overdischarge. Moreover, the effect of preventing the permeation short circuit is further enhanced. When the bag-shaped separator stores the positive electrode plate, the stratification of the electrolyte solution is easily prevented. When the bag-shaped separator stores the negative electrode plate, by the formation of the first rib in the bag, the diffusivity of the electrolyte solution in the bag is easily increased. Unlike the positive electrode current collector, the negative electrode current collector has a small extension during charge-discharge. Therefore, when the negative electrode plate is stored in the bag-shaped separator, the separator is prevented from breaking due to the extension of the current collector, and a short circuit can thus be prevented.

The lead-acid battery may include a fiber mat interposed between the positive electrode plate and the negative electrode plate. When the fiber mat is provided, the electrode plate is pressed by the fiber mat to decrease the amount of electrolyte solution around the electrode plate and also decrease the diffusivity. In the above aspect of the present invention, by providing the first rib on at least the negative electrode plate side of the separator, even when the fiber mat is provided, the electrolyte solution can be held near the negative electrode plate, and the diffusivity of the electrolyte solution can be improved.

Hereinafter, the lead-acid battery according to the embodiment of the present invention will be described for each of the main components, but the present invention is not limited to the following embodiment.

### (Separator)

The separator includes a base made of a microporous film, and a rib protruding from at least one main surface of the base. The separator may include the rib protruding from one main surface of the base and a rib protruding from the other main surface of the base. The separator at least includes the rib protruding from one main surface and is disposed such that this rib is located on the negative electrode plate side. The rib located on the negative electrode plate side is called a first rib. When the separator includes the rib protruding from the other main surface of the base, this rib is disposed on the positive electrode plate side (i.e., so as to face the positive electrode plate). The rib located on the positive electrode plate side is called a second rib. The first rib can enhance the diffusivity of the electrolyte solution near the negative electrode plate, so that the PSOC life performance can be improved, and the permeation short circuit can be prevented. In addition, since the precipitation of aluminum hydroxide is prevented, a decrease in charge acceptability during overdischarge can be prevented.

The separator is formed using a polymer material (but different from fibers). At least the base is a porous sheet and can also be called a porous film. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

It is assumed that, similarly to the above, the average thickness of the base, the average height of the ribs, and the average pitch of the ribs to be described below are obtained for a separator taken out of a chemically converted lead-acid battery after full charge, washed, and vacuum-dried (dried under pressure lower than atmospheric pressure).

The average thickness of the base is, for example, 100 µm or more and 300 µm or less, and preferably 150 µm or more and 250 µm or less. When the average thickness of the base is in such a range, the height of the first rib, as well as the height of the second rib if necessary, can be easily ensured while the capacity is kept high.

The average thickness of the base is obtained by measuring the thickness of the base at five freely selected locations in a cross-sectional photograph of the separator and averaging the measured thickness.

The first rib is formed on the surface of the separator facing the negative electrode plate. The average height of the first rib is, for example, 0.05 mm or more, and preferably 0.07 mm or more. When the average height of the first rib is in such a range, the electrolyte solution is more easily diffused. From the viewpoint of ensuring a high capacity, the average height of the first rib is, for example, 0.40 mm or less, and preferably 0.20 mm or less. Any combination of these lower and upper limits is possible. The separator is preferably formed with the first rib at such an average height in at least a region facing the negative electrode plate (preferably, a region where the negative electrode material is present). For example, the first rib having such an average height is preferably formed in 70% or more of the area of the region of the separator facing the negative electrode plate.

Note that the height of the first rib refers to a distance from one main surface of the base to the top of the first rib at a predetermined position of the first rib. In a case where the main surface of the base is not flat, the height of the first rib is assumed to be the distance from the highest position of one main surface of the base to the top of the first rib at a predetermined position of the first rib when the separator is placed flat with the first rib side facing up. The average height of the first ribs is obtained by averaging the heights of the first rib measured at ten freely selected locations of the first ribs on one main surface of the base.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate. A difference is likely to be produced in specific gravity of the electrolyte solution between the upper and lower portions of the electrode plate, it is thus preferable to form the plurality of first ribs in a stripe shape along the height direction of the negative electrode plate from the viewpoint of further increasing the diffusivity of the electrolyte solution.

Note that a lug for extracting current from an electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The average pitch of the stripe-shaped or grid-shaped first ribs is, for example, 0.3 mm or more and 10 mm or less, and preferably 0.5 mm or more and 5 mm or less. When the separator includes a region in which the first ribs are formed at an average pitch in such a range, the effect of improving the diffusivity of the electrolyte solution near the negative electrode plate is easily obtained. The separator is preferably formed with the first ribs at such an average pitch in a region facing the negative electrode plate (preferably, a region where the negative electrode material is present). For example, the first ribs having such an average pitch are preferably formed in 70% or more of the area of the region facing the negative electrode plate. In a region not facing the negative electrode plate or a region facing a region where the negative electrode material of the negative electrode plate is not present, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in the region of the separator not facing the negative electrode plate or the region facing a region where the negative electrode material is not present, the average pitch may be calculated excluding this region. The average pitch of such partially densely formed first ribs can be calculated for this region, similarly to the above.

The second rib is formed on the surface of the separator facing the positive electrode plate. The average height of the second rib is, for example, 0.3 mm or more, and preferably 0.4 mm or more. When the average height of the second rib is within such a range, the oxidation degradation of the separator is easily prevented. From the viewpoint of ensuring a high capacity, the average height of the second rib is, for example, 1.0 mm or less, and may be 0.7 mm or less. Any combination of these lower and upper limits is possible. The separator is preferably formed with the second rib at such an average height in at least a region facing the positive electrode plate (preferably, a region where the positive electrode material is present). For example, the second rib having such an average height is preferably formed in 70% or more of the area of the region facing the positive electrode plate.

The average height of the second rib is obtained according to the case of the first rib. The height of the second rib refers to a distance from the other main surface of the base to the top of the second rib at a predetermined position of the second rib, according to the case of the first rib.

The pattern and the orientation of the second rib are not particularly limited and may be selected, for example, from those described for the first rib. The average pitch of the stripe-shaped or grid-shaped second rib is, for example, 1 mm or more and 15 mm or less, and preferably 5 mm or more and 10 mm or less. When the separator includes a region in which the second ribs are formed at an average pitch in such a range, the effect of preventing the oxidation degradation of the separator is further enhanced. The separator is preferably formed with the second ribs at such an average pitch in a region facing the positive electrode plate (preferably, a region where the positive electrode material is present). For example, the second ribs having such an average pitch are preferably formed in 70% or more of the area of the region of the separator facing the positive electrode plate. In a region not facing the positive electrode plate or a region facing a region where the positive electrode material of the positive electrode plate is not present, such as the end of the separator, the second rib may or may not be formed, and a plurality of second ribs may be formed densely (e.g., at an average pitch of 0.5 mm or more and 5 mm or less).

Note that the pitch of the second ribs is the distance between the tops of the adjacent second ribs (more specifically, the distance between the centers of the adjacent second ribs in a direction crossing the second rib). The average pitch of the second ribs can be calculated according to the average pitch of the first ribs.

The sheet-shaped separator may be sandwiched between the negative electrode plate and the positive electrode plate, or by storing the negative electrode plate or the positive electrode plate in the bag-like separator, the separator may be interposed between the negative electrode plate and the positive electrode plate. When a bag-shaped separator is used, the electrolyte solution is hardly diffused, but the provision of the first rib and the second rib improves the diffusivity. When the negative electrode plate is stored in the bag-shaped separator, the diffusivity of the electrolyte solution near the negative electrode plate is easily enhanced by the first rib. When the positive electrode plate is stored in the bag-shaped separator, the stratification can be prevented.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

### (Electrolyte solution)

The electrolyte solution is an aqueous solution containing sulfuric acid and contains aluminum ions. The electrolyte solution may be gelled if necessary. The electrolyte solution may contain an additive used for a lead-acid battery, if necessary.

The concentration of aluminum ions in the electrolyte solution is 0.02 mol/L or more and 0.25 mol/L or less. When the concentration of aluminum ions is less than 0.02 mol/L (e.g., 0.01 mol/L), the effect of improving the PSOC life performance by the first rib cannot be exhibited sufficiently. When the concentration of aluminum ions is less than 0.02 mol/L (e.g., 0.01 mol/L), it is not possible to obtain the effect of improving the charge acceptability after overdischarge by providing the first rib. When the concentration of the aluminum ion exceeds 0.25 mol/L, the charge acceptability after overdischarge decreases significantly. From the viewpoint of ensuring high charge acceptability after overdischarge, the concentration of aluminum ions in the electrolyte solution is preferably 0.02 mol/L or more and 0.20 mol/L or less. From the viewpoint that the effect of preventing a decrease in charge acceptability after overdischarge by the first rib is likely to become apparent, the concentration of aluminum ions in the electrolyte solution is preferably 0.05 mol/L or more (e.g., 0.05 mol/L or more and 0.25 mol/L or less, or 0.05 mol/L or more and 0.20 mol/L or less).

Aluminum ions can be contained in the electrolyte solution by, for example, dissolving an aluminum compound in an aqueous solution containing sulfuric acid. As the aluminum compound, one soluble in an aqueous solution containing sulfuric acid is used. As such a compound, for example, an aluminum salt of an inorganic acid, and the like, are used, and among them, aluminum sulfate is preferred.

The specific gravity at 20°C of the electrolyte solution in a fully charged lead-acid battery after chemical conversion is, for example, 1.10 g/cm³ or more and 1.35 g/cm³ or less.

### (Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A clad-type positive electrode plate is formed by filling a spine inserted tube with lead powder or slurry-like lead powder, and joining a plurality of tubes with a joint.

### (Negative electrode plate)

The negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives.

The negative active material in a charged state is spongy lead, whereas a non-chemically converted negative electrode plate is usually produced using lead powder.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

### (Fiber mat)

The lead-acid battery may further include a fiber mat interposed between the positive electrode plate and the negative electrode plate. When the fiber mat is disposed, the electrode plate is pressed by the fiber mat, and it becomes difficult to hold the electrolyte solution around the electrode plate. In the above aspect of the present invention, the first rib is provided on the separator, so that the electrolyte solution can be easily ensured near the negative electrode plate, and high diffusivity of the electrolyte solution can be ensured.

The fiber mat is different from the separator and is made of a sheet-shaped fiber aggregate. As such a fiber aggregate, a sheet in which fibers insoluble in the electrolyte solution are entangled is used. Such sheets include, for example, nonwoven fabrics, woven fabrics, knits, and the like.

As the fibers, it is possible to use glass fibers, polymer fibers (polyolefin fibers, acrylic fibers, polyester fibers such as polyethylene terephthalate fibers, etc.), pulp fibers, and the like. Among the polymer fibers, polyolefin fibers are preferred.

The fiber mat may contain components in addition to the fibers, such as an acid-resistant inorganic powder and a polymer as a binder. As the inorganic powder, it is possible to use silica powder, glass powder, diatomaceous earth, and the like. However, the fiber mat is mainly composed of the fibers. For example, 60% by mass or more of the fiber mat is formed using the fibers.

The fiber mat may be disposed between the negative electrode plate and the positive electrode plate. With the separator being also disposed between the negative electrode plate and the positive electrode plate, the fiber mat may be provided between the negative electrode plate and the positive electrode plate, for example, between the negative electrode plate and the separator, and/or between the separator and the positive electrode plate. From the viewpoint of preventing the stratification of the electrolyte solution, the fiber mat is preferably disposed so as to be in contact with the negative electrode plate. In addition, from the viewpoint of preventing softening and falling of the positive active material, it is preferred that the fiber mat be disposed so as to be in contact with the positive electrode plate. From the viewpoint of enhancing an effect of preventing the softening and falling, it is preferable to dispose the fiber mat in the state of being pressed against the positive electrode plate, but in this case, the electrolyte solution near the negative electrode plate is likely to be insufficient. In the present embodiment, since the first ribs are provided on the negative electrode plate side of the separator, even when the fiber mat is disposed on the positive electrode plate side, the electrolyte solution can be ensured near the negative electrode plate.

Fig. 1 shows an external view of an example of a lead-acid battery according to an embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups11 of the adjacent cell chambers 14 in series.

### [Example]

Hereinafter, the present invention will be specifically described based on examples and comparative examples, but the present invention is not limited to the following examples.

### <<Lead-acid batteries A1 to A5 and B1>>

### (1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amounts of the carbon black and the organic expander were adjusted so that the contents thereof contained in 100% by mass of the negative electrode material were 0.3% by mass and 0.2% by mass, respectively. The carbon black and the organic expander were then mixed into the negative electrode paste.

### (2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

### (3) Preparation of lead-acid battery

Each non-chemically converted negative electrode plate was stored into a bag-shaped separator formed using a polyethylene microporous film, and an electrode group was formed using five non-chemically converted negative electrode plates and four non-chemically converted positive electrode plates per cell. The separator had a first rib inside the bag and a second rib outside the bag. The separator was provided with a plurality of stripe-shaped first ribs and a plurality of second ribs, and the plurality of first ribs and the plurality of second ribs were formed along the height directions of the negative electrode plate and the positive electrode plate, respectively. The average height of the first ribs was 0.1 mm, and the average pitch of the first ribs in a region facing the negative electrode plate was 1 mm. The average height of the second ribs was 0.4 mm, and the average pitch of the second ribs in a region facing the positive electrode plate was 10 mm. The average thickness of the base of the separator was 0.2 mm. The average height of the ribs of the separator, the average thickness of the base, and the average pitch of the ribs are values obtained for the separator before the preparation of the lead-acid battery. However, those values are almost the same as values obtained by measurement preformed for the separator after the preparation of the lead-acid battery in the procedure described above.

The electrode group was inserted into a container made of polypropylene, the container was filled with an electrolyte solution, and chemical conversion was performed in the container, to assemble flooded-type lead-acid batteries A1 to A5 and B1 each having a nominal voltage of 12 V and a nominal capacity of 30 Ah (five-hour rate). As the electrolyte solution, a solution obtained by dissolving aluminum sulfate in a sulfuric acid aqueous solution having a specific gravity of 1.28 at 20°C was used. The additive amount of aluminum sulfate was adjusted so that the concentration of aluminum ions contained in the electrolyte solution for each battery was the value shown in Table 2. When aluminum sulfate has been completely dissolved at the time of preparation of the electrolyte solution, the concentration of aluminum at the time of preparation of the electrolyte solution (i.e., the concentration of aluminum sulfate) is almost the same as the concentration of aluminum ions in the electrolyte solution in a chemically converted lead-acid battery after full charge.

### <<Lead-acid battery B2>>

An electrolyte solution prepared without using aluminum sulfate was used. Except for this, the lead-acid battery B2 was assembled similarly to the lead-acid battery A1.

### <<Lead-acid battery B3>>

A bag-shaped separator having no first rib was used. Except for this, the lead-acid battery B3 was assembled similarly to the lead-acid battery B2.

### <<Lead-acid batteries B4 to B9>>

A bag-shaped separator having no first rib was used. Except for this, lead-acid batteries B4 to B9 were assembled similarly to the lead-acid batteries B1 and A1 to A5.

### [Evaluation 1: PSOC life performance]

The lead-acid battery was charged and discharged under the idling stop condition in accordance with SBA S 0101: 2014. Specifically, (a) to (c) below were repeated as one cycle at 25°C until the discharge end voltage became 7.2 V or less, and the number of cycles at this time was obtained. The PSOC life performance was evaluated by the ratio at the time when the number of cycles in the lead-acid battery B3 was set to 100. At the time of charge and discharge, the operation was suspended for 40 to 48 hours every 3600 cycles.
(a) Discharge 1: discharge is performed at a current value of 32 A for 59 seconds.
(b) Discharge 2: discharge is performed at a current value of 300 A for one second.
(c) Charge: charge is performed at a limited current of 100 A and a voltage of 14.0 V for 60 seconds.

### [Evaluation 2: Charge acceptability after overdischarge]

A high rate discharge characteristic test stipulated in Japanese Industrial Standards (JIS) D5301: 2006 was performed using a chemically converted lead-acid battery after full charge. The discharge was performed at a discharge current (150 A) until a terminal voltage reached 1 V per cell at -15°C, and a discharge time at this time (initial discharge time t0) was obtained.

Next, after the lead-acid battery was brought into an overdischarged state under the conditions of Steps 1 and 2 shown in Table 1, recovery charge was performed under the conditions of Steps 3 and 4. A high rate discharge characteristic test similarly to the above was performed on the lead-acid battery subjected to the recovery charge after overdischarge, and a discharge time (t1) was obtained. A ratio t1/t0 of the high rate discharge performance each before and after overdischarge was calculated and used as an index of charge acceptability after overdischarge. The results were each represented using a ratio at the time when the result of the lead-acid battery B3 was set to 100.

**[Table 1]**

| Step | Detail | Test conditions | | Water bath temperature (°C) |
|---|---|---|---|---|
| | | Current, voltage, or resistance | Termination condition | |
| 1 | CC discharge | 0.05 CA | 1.0 V/cell | 25 |
| 2 | Resistance standing | 10 Ω | 28 days | |
| 3 | CV charge | 2.4 V/cell, up to 20 A | 10 min | |
| 4 | CC charge | 0.1 CA | 20 hrs | |

| | | | | |
|---|---|---|---|---|
| * CC discharge: constant current discharge CV charge: constant voltage charge CC charge: constant current charge | | | | |

### [Evaluation 3: Permeation short circuit]

The lead-acid battery after being evaluated in Evaluation 1 was disassembled, the separator was taken out, and the presence or absence of a permeation mark of lead was confirmed.

Table 2 shows the results of the lead-acid batteries A1 to A5 and B1 to B9.

**[Table 2]**

| | First rib | Al ion concentration (mol/L) | PSOC life performance | Charge acceptability after overcharge | Permeation mark |
|---|---|---|---|---|---|
| B3 | Not included | 0 | 100 | 100 | No |
| B4 | | 0.01 | 105 | 100 | No |
| B5 | | 0.02 | 117 | 98 | Yes |
| B6 | | 0.05 | 147 | 96 | Yes |
| B7 | | 0.1 | 145 | 95 | Yes |
| B8 | | 0.2 | 140 | 95 | Yes |
| B9 | | 0.25 | 137 | 92 | Yes |
| B2 | Included | 0 | 103 | 101 | No |
| B1 | | 0.01 | 106 | 100 | No |
| A1 | | 0.02 | 121 | 99 | No |
| A2 | | 0.05 | 151 | 101 | No |
| A3 | | 0.1 | 149 | 99 | No |
| A4 | | 0.2 | 145 | 98 | No |
| A5 | | 0.25 | 145 | 95 | No |

As shown in Table 2, in the lead-acid batteries A1 to A5 where the aluminum ion concentration in the electrolyte solution is 0.02 mol/L or more and 0.25 mol/L or less, and the separator including the first rib is used, the PSOC life performance has been greatly improved (specifically, improved by 10 to 50%) as compared to lead-acid batteries B1 and B2 where the aluminum ion concentration is less than 0.02 mol/L. In the lead-acid batteries A1 to A5, the decrease in charge acceptability after overdischarge has been prevented, and among those, in the lead-acid batteries A1 to A4, results comparable to that of the lead-acid battery B2 using an electrolyte solution containing no aluminum ion are shown.

Further, in comparison with the lead-acid batteries B3 to B9 using separators having no first rib, in the lead-acid batteries A1 to A5, the PSOC life performance is greatly improved due to the presence of the first rib. In the case of the separator having no first rib, when the aluminum ion concentration is 0.02 mol/L or more, the charge acceptability after overdischarge tends to decrease (lead-acid batteries B3 to B9). However, even at such aluminum ion concentration, the provision of the first rib has prevented a decrease in charge acceptability after overdischarge.

The effect of improving the PSOC life performance by the first rib is hardly obtained in a case where the aluminum ion concentration is 0.01 mol/L (comparison between the battery B4 and the battery B1). In contrast, when the aluminum ion concentration is 0.02 to 0.25 mol/L, the improvement effect by the first rib (i.e., the effect obtained by subtracting the effect by the aluminum ions) becomes apparent, and the improvement effect of the PSOC life performance by the first rib is four times or more than that in the case where the aluminum ion concentration is 0.01 mol/L. The effect of improving the charge acceptability after overdischarge by the first rib (i.e., the effect obtained by subtracting the effect produced by aluminum ions) cannot be obtained when the aluminum ion concentration is 0.01 mol/L (comparison between the battery B4 and the battery B1), whereas the effect is particularly significant when the aluminum ion concentration is 0.05 mol/L or more.

When the aluminum ion concentration is 0.02 mol/L or more, in the case of using the separator having no first rib is used, a permeation mark is observed (lead-acid batteries B5 to B9). In contrast, in the lead-acid batteries A1 to A5, even when the aluminum ion concentration is in the same range, the provision of the first ribs has prevented the permeation and precipitation of lead into the separator.

### INDUSTRIAL APPLICABILITY

The lead-acid battery according to one aspect of the present invention is applicable to a valve regulated lead-acid battery and a flooded-type lead-acid battery, and can be suitably used as a power source for starting an automobile, a motorcycle, or the like.

### DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container
13: partition
14: cell chamber
15: lid
16: negative electrode terminal
17: positive electrode terminal
18: vent plug

## Claims

1. A lead-acid battery (1) comprising:
a positive electrode plate (3);
a negative electrode plate (2);
a separator (4) interposed between the positive electrode plate (3) and the negative electrode plate (2); and
an electrolyte solution,
wherein
the separator (4) includes a rib on at least the negative electrode plate (2) side,
the electrolyte solution contains aluminum ions, and
a concentration of the aluminum ions in the electrolyte solution is 0.02 mol/L or more and 0.25 mol/L or less, **characterized in that**:
the separator (4) further includes a rib on the positive electrode plate side.

2. The lead-acid battery (1) according to claim 1, wherein the concentration of the aluminum ions in the electrolyte solution is 0.02 mol/L or more and 0.20 mol/L or less.

3. The lead-acid battery (1) according to claims 1 or 2, wherein the separator (4) has a bag shape.

4. The lead-acid battery (1) according to claim 3, wherein the separator (4) stores the negative electrode plate (2).

5. The lead-acid battery (1) according to claim 3, wherein the separator stores the positive electrode plate (3).

6. The lead-acid battery (1) according to any one of claims 1 to 5, wherein the rib is formed along a height direction of the negative electrode plate (2).

7. The lead-acid battery (1) according to any one of claims 1 to 6, further comprising a fiber mat interposed between the positive electrode plate (3) and the negative electrode plate (2).

## Patentansprüche

1. Blei-Säure-Akkumulator (1), umfassend:
eine positive Elektrodenplatte (3);
eine negative Elektrodenplatte (2);
einen Separator (4), der zwischen der positiven Elektrodenplatte (3) und der negativen Elektrodenplatte (2) zwischengeordnet ist; und
eine Elektrolytlösung,
wobei
der Separator (4) zumindest auf der Seite der negativen Elektrodenplatte (2) eine Rippe aufweist,
die Elektrolytlösung Aluminiumionen enthält, und
eine Konzentration der Aluminiumionen in der Elektrolytlösung 0,02 mol/l oder mehr und 0,25 mol/l oder weniger beträgt,
**dadurch gekennzeichnet, dass**:
der Separator (4) ferner auf der Seite der positiven Elektrodenplatte eine Rippe aufweist.

2. Blei-Säure-Akkumulator (1) nach Anspruch 1, wobei die Konzentration der Aluminiumionen in der Elektrolytlösung 0,02 mol/l oder mehr und 0,20 mol/l oder weniger beträgt.

3. Blei-Säure-Akkumulator (1) nach Anspruch 1 oder 2, wobei der Separator (4) eine Taschenform aufweist.

4. Blei-Säure-Akkumulator (1) nach Anspruch 3, wobei der Separator (4) die negative Elektrodenplatte (2) aufnimmt.

5. Blei-Säure-Akkumulator (1) nach Anspruch 3, wobei der Separator die positive Elektrodenplatte (3) aufnimmt.

6. Blei-Säure-Akkumulator (1) nach einem der Ansprüche 1 bis 5, wobei die Rippe entlang einer Höhenrichtung der negativen Elektrodenplatte (2) gebildet ist.

7. Blei-Säure-Akkumulator (1) nach einem der Ansprüche 1 bis 6, ferner umfassend eine Fasermatte, die zwischen der positiven Elektrodenplatte (3) und der negativen Elektrodenplatte (2) zwischengeordnet ist.

## Revendications

1. Accumulateur au plomb-acide (1) comprenant :
une plaque-électrode positive (3) ;
une plaque-électrode négative (2) ;
un séparateur (4) intercalé entre la plaque-électrode positive (3) et la plaque-électrode négative (2) ; et
une solution électrolytique,
dans lequel
le séparateur (4) comporte une nervure au moins sur le côté plaque-électrode négative (2),
la solution électrolytique contient des ions d'aluminium, et
une concentration des ions d'aluminium dans la solution électrolytique est égale ou supérieure à 0,02 mol/l et égale ou inférieure à 0,25 mol/l,
**caractérisé en ce que** :
le séparateur (4) comporte en outre une nervure sur le côté plaque-électrode positive.

2. Accumulateur au plomb-acide (1) selon la revendication 1, dans lequel la concentration des ions d'aluminium dans la solution électrolytique est égale ou supérieure à 0,02 mol/l et égale ou inférieure à 0,20 mol/l.

3. Accumulateur au plomb-acide (1) selon les revendications 1 ou 2, dans lequel le séparateur (4) présente une forme de poche.

4. Accumulateur au plomb-acide (1) selon la revendication 3, dans lequel le séparateur (4) loge la plaque-électrode négative (2).

5. Accumulateur au plomb-acide (1) selon la revendication 3, dans lequel le séparateur loge la plaque-électrode positive (3).

6. Accumulateur au plomb-acide (1) selon l'une quelconque des revendications 1 à 5, dans lequel la nervure est formée dans le sens de la hauteur de la plaque-électrode négative (2).

7. Accumulateur au plomb-acide (1) selon l'une quelconque des revendications 1 à 6, comprenant en outre un mat de fibres intercalé entre la plaque-électrode positive (3) et la plaque-électrode négative (2).
